# EUROPÄISCHE PATENTSCHRIFT

(11) **EP 1 667 067 B1**
(45) Veröffentlichungstag und Bekanntmachung des Hinweises auf die Patenterteilung: **01.10.2008**
(21) Anmeldenummer: 05013163.0
(22) Anmeldetag: 17.06.2005
(51) Int. Cl.: G06T 7/00

(54) **Verfahren und Vorrichtung zum Kalibrieren eines medizinischen Instrumentes**
Method and apparatus for calibrating a medical instrument
Procédé et appareil pour calibrer un instrument médical

(30) Priorität: 15.11.2004 EP 04027075
(43) Veröffentlichungstag der Anmeldung: 07.06.2006
(73) Patentinhaber: BrainLAB AG, 85551 Kirchheim/Heimstetten (DE)
(72) Erfinder: Feilkas, Thomas, 85567 Grafing (DE)
(74) Vertreter: Schwabe - Sandmair - Marx

(56) Entgegenhaltungen:
- US-A1- 2001 051 761
- US-A1- 2004 169 673
- COLCHESTER A C F ET AL: "Development and preliminary evaluation of VISLAN, a surgical planning and guidance system using intra-operative video imaging" MEDICAL IMAGE ANALYSIS, OXFORDUNIVERSITY PRESS, OXFORD, GB, Bd. 1, Nr. 1, 1996, Seiten 73-90, XP002322964 ISSN: 1361-8423

## Beschreibung

Die vorliegende Erfindung bezieht sich auf eine Vorrichtung und ein Verfahren zum Kalibrieren eines zum Beispiel medizinisch verwendbaren Instrumentes, wie z.B. einer Schere oder eines Spreaders, oder eines Implantats und insbesondere auf das Erfassen der geometrischen Struktur oder Konfiguration des Instrumentes oder Implantats.

Um ein medizinisches Instrument in der bildgeführten Chirurgie einsetzen zu können, muss dieses Instrument kalibriert bzw. verifiziert oder validiert sein, d.h. es muss bekannt sein, wie die genaue Abmessung, Konfiguration oder Anordnung des Instrumentes ist, da ansonsten aufgrund zum Beispiel einer Verbiegung einer Instrumentenspitze in ein gesundes Gewebe eingegriffen wird, welches neben dem eigentlich zu behandelnden Gewebe liegt, in welches eine unverbogene Instrumentenspitze eingreifen würde.

Eine Vorrichtung und ein Verfahren zum Kalibrieren eines gebogenen Elements sind aus der EP 1 413 258 A1 bekannt, wobei das gebogene Element mit einem Navigationselement verbunden ist, an eine Kalibrier-Vorrichtung angelegt wird und in Anlage an dieser Kalibrier-Vorrichtung bewegt wird, bis das Element kalibriert ist.

Aus der EP 1 369 090 A1 ist die Navigations-Kalibrierung medizinischer Instrumente oder Implantate bekannt, wobei eine räumliche Position des Instruments oder Implantats mittels eines medizinischen Navigationssystems ermittelt wird, um die Relativposition des Instruments oder Implantats gegenüber anatomischen Daten zu ermitteln, wobei die räumliche Ausrichtung eines mehrdimensional ausgestalteten, funktionellen Abschnitts des Instruments oder Implantats ermittelt wird.

Die US 6,428,547 B1 beschreibt das Erkennen der Form eines Behandlungsgerätes, wobei das Behandlungsgerät in einem computergesteuerten kameraunterstützten Navigationssystem mittels eines Marker-Arrays, welches an dem Behandlungsgerät angebracht ist, referenziert wird, wobei Projektionen des Behandlungsgerätes mittels Röntgenaufnahmen detektiert werden und die Form des Behandlungsgerätes diesem in dem Navigationssystem über die Position des Marker-Arrays in den Projektionen zugeordnet wird.

Aus der US 6,724,922 B1 ist ein Verifikationsverfahren für Positionen in Kamerabildern bekannt.

Die DE 199 44 516 A1 beschreibt ein Verfahren zur Erfassung einer Objektform, wobei ein Kamerabild des Objektes erstellt wird, ein Umriss des Objektes in einer ersten Ebene durch eine mit der Kamera verbundene Auswertungseinheit erfasst wird, der Fokussierungsabstand der Kamera verändert wird, ein Umriss des Objektes in einer zweiten Ebene durch die Auswertungseinheit erfasst wird und diese Schritte wiederholt werden, bis eine ausreichende Zahl von Umrissen erfasst ist, so dass die räumliche Form des Objektes festgestellt werden kann.

COLCHESTER A. C. F. ET AL. "Development and preliminary evaluation of VISLAN, a surgical planning and guidance system using intra-operative video imaging MEDICAL IMAGE ANALYSIS, OXFORD UNIVERSITY PRESS, OXFORD, GB, Bd. 1, Nr. 1, 1996, Seiten 73-90, XP002322964 ISSN: 1361-8423 offenbart ein Verfahren zur Bestimmung der Position eines sogenannten Localizers aus Stereo-Bildern. An einem solchen Localizer ist ein binary acquisition target (BAT) angebracht, zur Bestimmung der Position und Orientierung des Localizers im Raum. Auf dem Localizer ist ein Rautenmuster angebracht, welches ebenfalls optisch erfasst wird. Die Kanten des Rautenmusters werden zur Verfeinerung der Positionsbestimmung in der Bildebene mit einer korrespondierenden Ansicht eines Modells des Musters verglichen.

Es ist eine Aufgabe der vorliegenden Erfindung, ein Verfahren und eine Vorrichtung zum einfachen Kalibrieren eines bevorzugt medizinisch verwendbaren Instrumentes oder Implantats vorzuschlagen.

Diese Aufgabe wird durch die Gegenstände der unabhängigen Ansprüche gelöst. Vorteilhafte Ausführungsformen ergeben sich aus den abhängigen Ansprüchen.

Bei einem erfindungsgemäβen Verfahren zum Kalibrieren, Verifizieren oder Validieren eines bevorzugt medizinisch verwendbaren Instrumentes oder Implantats (nachfolgend auch als Instrument) bezeichnet, an welchem mindestens ein Marker und bevorzugt drei Marker zum Beispiel in Form eines so genannten Referenzsternes oder mehrere Marker mit bekannter fester oder sich zum Beispiel in Abhängigkeit von der Konfiguration des Instrumentes veränderbarer Geometrie angebracht sind, wird die Position des Instrumentes in Raum auf bekannte Art mittels eines Navigationssystems anhand der Marker, welche zum Beispiel als reflektierende Oberflächen oder Kugeln ausgebildet sein können, ermittelt. Zur Erfassung der Position des Instrumentes kann eine Kamera vorgesehen sein, welche zum Beispiel Infrarot-Licht erfassen kann, welches von den Markern ausgesandt oder reflektiert wird, wobei die Kamera bevorzugt kalibriert ist und die Position der Kamera im Raum unbekannt oder auch bekannt oder definiert ist. Weiterhin wird die Geometrie, also zum Beispiel eine oder mehrere Ansichten, Abbildungen oder Umrisse des Instrumentes aus einer oder verschiedenen Richtungen optisch mittels einer Kamera erfasst, wobei diese Kamera die gleiche sein kann, welche zum Erfassen der Position der Marker verwendet wird, oder auch eine von dieser Kamera verschiedene zweite Kamera sein kann, mit welcher Bilder zum Beispiel im sichtbaren Wellenlängenbereich aufgenommen werden können.

Die Geometrie oder Kalibrier-Daten des Instrumentes sind in einer Software oder einem Computer gespeichert, so dass die dreidimensionale Darstellung des Instrumentes zum Beispiel in einer Datenbank abgelegt ist. Diese gespeicherten so genannten Präkalibrierdaten werden mit der von der Kamera erfassten Geometrie des Instrumentes verglichen, um durch diesen Vergleich mit den optischen Erfassungsdaten festzustellen, ob die optisch erfassten und die tatsächliche Geometrie oder Ausbildung des Instrumentes darstellenden Daten mit den Präkalibrierdaten übereinstimmen. Es wird somit eine Zuordnung zwischen sogenannten Tracking-Daten und einem Kamerabild vorgenommen, wobei im Falle der Übereinstimmung der Kamerabilddaten mit den Präkalibrier-Daten das Instrument kalibriert bzw. verifiziert oder validiert ist und im Falle eines festgestellten Unterschiedes oder eine Abweichung von den Präkalibrier-Daten zum Beispiel eine Fehlermeldung ausgegeben werden kann, so dass das Instrument kalibriert werden muss oder die Präkalibrier-Daten, welche zur nachfolgenden Navigation verwendet werden, an die optischen Erfassungsdaten angepasst werden. Vorzugsweise werden aus einem dreidimensionalen Daten- oder Software-Modell des Instruments jeweils diejenigen Ansichten oder Umrisse des Instrumentenmodells berechnet, welche der mittels der Marker gemessenen Orientierung oder Relativ-Position des realen Instruments zur Kamera entsprechen.

Wenn man davon ausgeht, dass das vom Rechner berechnete Bild auf Basis der erfassten Position des als dreidimensionales Modell bekannten Instruments im Raum und des Wissens um die Kalibrierung der Video-Kamera die Darstellung oder Sicht oder ein Modell der Welt bzw. eines Instrumentes durch den Computer oder eine Software ist und die von einer Kamera erfassten Videoeingabedaten die Situation in der realen oder echten Welt, also zum Beispiel ein tatsächliches vorhandenes Instrument, zeigen, so würde im Falle einer genau kalibrierten Videokamera, also einer Kamera mit bekannter Position und Ausrichtung und Erfassungsbereich und eines registrierten oder kalibrierten medizinischen Instrumentes das vom Rechner berechnete Bild für ein präkalibriertes Instrument exakt mit dem Bild zusammenfallen, welches in der Videoeingabe gesehen wird. Falls dies nicht der Fall ist, ist entweder die Kalibrierung oder Abstimmung der Kamera fehlerhaft oder das Instrument entspricht nicht den Präkalibrier-Daten, da es zum Beispiel aufgrund häufigen Gebrauchs verbogen wurde. Wenn angenommen wird, dass die Kalibrierung der Kamera während des gesamten Verfahrens korrekt ist, so kann mit dem von der Kamera erfassbaren kalibrierten Volumen eine zuverlässige Verifikation von Instrumenten, zu welchen Präkalibrier-Daten vorliegen, durchgeführt werden.

Die z.B. in einem Computer gespeicherten Daten, welche die Geometrie und optional auch mögliche Freiheitsgrade des Instrumentes definieren, sind als Präkalibrier-Daten zum Beispiel als eine Beschreibung des dreidimensionalen Objektes für ein Navigationssystem zum Beispiel in einer Datenbank gespeichert und können beispielsweise ein dreidimensionales Modell darstellen, welches die genaue Form eines Objekts oder Instruments und die Position eines jeden Markers oder Referenz-Arrays auf dem Objekt beschreibt. Das Navigationssystem oder ein Computer kann das dreidimensionale Modell darstellen, welches dem Instrument entspricht, das der Chirurg verwendet. Die Beschreibung des präkalibrierten Instrumentes kann zum Beispiel die Information umfassen, welche Bereiche oder funktionelle Stellen oder Flächen des Instrumentes verifiziert werden müssen. Ebenso können Informationen als Präkalibrier-Daten gespeichert werden, mit welchen mögliche Formen, welche das Instrument annehmen kann, festgelegt werden, wie zum Beispiel Informationen bezüglich möglicherweise vorhandener Gelenke und Bewegungsmöglichkeiten oder allgemein Informationen bezüglich der Veränderungsmöglichkeiten oder Freiheitsgrade des Instrumentes.

Ein kalibriertes Videosignal ist eine Eingabe, welche von einer Standardvideokamera erhalten wird und dessen Eigenschaften oder Parameter, wie zum Beispiel die Position und/oder die Erfassungsfunktion der Kamera, bestimmt und für eine so genannte "virtuelle Kamera" berechnet werden. Diese virtuelle Kamera wird von dem Computer verwendet, um Bilder basierend auf dreidimensionalen Objekten z.B. durch eine Projektion in Erfassungsrichtung der realen Kamera zu berechnen, welche mit den tatsächlich vorhandenen oder erfassten Ansichten oder Objekten übereinstimmen, so dass, wenn die Videokamera zum Beispiel auf ein würfelförmiges Objekt mit bekannten Abmessungen gerichtet ist, die Position des würfelförmigen Objektes im dreidimensionalen Raum nach dem Kalibrieren des Kameravolumens anhand der Bildinformationen bestimmt werden kann. Eine zusätzliche Information kann nun zum Beispiel in das von der Kamera aufgenommene Videobild eingeblendet werden, so dass diese zusätzliche Information, wie zum Beispiel eine virtuelle Darstellung des zu verifizierenden Instrumentes, wie ein Teil der von der Kamera aufgenommenen Szene wirkt.

Das kalibrierte Videosignal wird verwendet, um präkalibrierte Instrumente zu verifizieren und validieren, wobei erfindungsgemäß kein anderes Objekt, wie zum Beispiel eine Anlagefläche, verwendet werden muss, so dass der Arbeitsbereich des Chirurgen nicht durch ein zusätzliches Objekt oder Instrument beeinträchtigt wird. Die erfindungsgemäß mögliche berührungslose Verifikation erfordert lediglich, dass ein Chirurg das Instrument, welches kalibriert werden soll, so hält, dass die Videokamera zumindest einen Umriss erfassen oder eine Ansicht des Objektes von mindestens einer Seite aufnehmen kann, wobei eine nachgeschaltete Software, wie zum Beispiel das Navigationssystem, automatisch die Korrektheit der erfassten Form durch einen Vergleich mit den Präkalibrier-Daten bestimmen kann.

Falls ein Instrument mit einer komplexeren Form kalibriert werden soll, so kann es erforderlich sein, dass der Benutzer das Instrument bewegt und/oder dreht, um mehrere Ansichten des Objektes mit der Kamera aufzunehmen, wobei eine Software zum Beispiel eine entsprechende Instruktion zur Bewegung des Instrumentes ausgeben kann.

Durch das erfindungsgemäße Verfahren kann sichergestellt werden, dass nur kalibrierte Instrumente oder Implantate für chirurgische Verfahren verwendet werden, da zum Beispiel im Falle eines Abweichens der Form eines zu verwendenden Instruments von den Präkalibrier-Daten eine Fehlermeldung ausgegeben werden kann oder das Navigationssystem ein Navigieren des als fehlerhaft erkannten Instrumentes nicht ermöglicht.

Da es erfindungsgemäß nicht mehr erforderlich ist, ein Instrument zum Kalibrieren an eine Referenzfläche anzulegen, wird durch das erfindungsgemäße Verfahren auch die Handhabung von steril zu haltenden Instrumenten vereinfacht.

Vorzugsweise werden nicht nur eine, sondern mindestens zwei oder mehrere Seitenansichten des Instrumentes von einer optischen Kamera erfasst, wobei das Instrument auch im Sichtbereich der Kamera gedreht, verschoben oder rotiert werden kann. Vorzugsweise kann eine Sichtbarkeitsüberprüfung von bestimmten Punkten, wie zum Beispiel der Spitze eines Instrumentes, durchgeführt werden. Hierzu kann zum Beispiel überprüft werden, ob in den Präkalibrier-Daten definierte spezifische Punkte, wie zum Beispiel Eckpunkte, Kanten oder Spitzen des Instrumentes, auch in der optisch erfassten Aufnahme sichtbar sind oder verdeckt werden, wobei zum Beispiel im Falle der Verdeckung ein Signal ausgegeben werden kann, um einem Benutzer anzuzeigen, dass er das unverdeckte Instrument nochmals in die Sichtlinie der Kamera halten soll.

Es ist möglich, dass nur bestimmte Bereiche, wie zum Beispiel Eckpunkte, Kanten, eine Spitze oder funktionale Flächen des Instrumentes, welche charakteristisch oder für die Funktion des Instrumentes relevant sind, bezüglich einer Übereinstimmung mit den Präkalibrier-Daten geprüft werden, wobei eine diesbezügliche Information in einer Software und zum Beispiel in den Präkalibrier-Daten abgelegt sein kann.

Allgemein können die Präkalibrier-Daten Informationen zur Geometrie, Abmessung, räumlichen Anordnung von kombinierbaren Elementen, wie zum Beispiel eines Instruments mit austauschbaren Spitzen oder eines Instruments zur Platzierung von Implantaten in Verbindung mit dem gewählten Implantat und/oder zu möglichen Freiheitsgraden, wie zum Beispiel Gelenken oder Verformungsmöglichkeiten, des Instrumentes enthalten, so dass unter Verwendung der Präkalibrier-Daten zum Beispiel die Konfiguration oder der aktuelle Zustand eines zum Beispiel verstellbaren oder verformbaren Instrumentes erkannt werden kann, um diese Information über die tatsächliche Konfiguration des Instrumentes nachfolgend zum Beispiel im Rahmen der Behandlungsunterstützung oder für einen chirurgischen Eingriff mittels bildgeführter Chirurgie zu verwenden.

Ebenso ist es möglich, dass durch einen Vergleich der von einer Kamera erfassten Bilddaten mit den Präkalibrier-Daten überprüft wird, ob ein Instrument innerhalb einer vorgegebenen Spezifikation liegt, welche zum Beispiel in den Präkalibrier-Daten als Toleranz bezüglich Abmessungen des Instrumentes angegeben sein kann. Falls festgestellt wird, dass ein Instrument eine Toleranzgrenze überschreitet, kann zum Beispiel eine entsprechende Meldung ausgegeben werden.

Weiterhin ist es möglich, dass die von der Kamera aufgenommenen Daten bezüglich des tatsächlichen Zustandes oder der Konfiguration des Instrumentes verwendet werden, um die Präkalibrier-Daten anzupassen oder zu modifizieren, so dass die mittels der Kamera ermittelten Daten bezüglich der tatsächlichen Konfiguration eines Instrumentes zum Beispiel einem Navigationssystem zur Verfügung gestellt werden können, um dieses Instrument präzise zu navigieren.

Es ist möglich, dass ein den Präkalibrier-Daten entsprechendes Instrument und/oder ein tatsächlich von der Kamera erfasstes Instrument zum Beispiel auf einem Bildschirm angezeigt wird, wobei auch beide Instrumente, d.h. das reale und das virtuelle Instrument, gleichzeitig nebeneinander oder aufeinander abgebildet zum Beispiel als sogenanntes Überlappungsbild angezeigt werden. Dabei kann ein Vergleich charakteristischer Punkte, wie zum Beispiel Ecken und/oder Kanten, durchgeführt werden, um festzustellen, ob das reale Instrument mit dem virtuellen Instrument gemäß den Präkalibrier-Daten übereinstimmt oder davon abweicht.

Vorzugsweise wird die Kamera zur Erfassung des Instrumentes kalibriert. Hierzu kann beispielsweise ein optisches Muster, wie zum Beispiel ein Schachbrett oder ein Gegenstand mit bekannten Abmessungen vor eine Kamera gehalten werden, so dass anhand der von der Kamera erfassten Bilddaten zum Beispiel die Abmessungen eines im Sichtbereich der Kamera befindlichen Objektes optional unter Verwendung von Navigationsdaten ermittelt werden können.

Gemäß einem weiteren Aspekt bezieht sich die Erfindung auf ein Computerprogramm, welches, wenn es in einen Computer geladen ist oder auf einem Computer läuft, einen oder mehrere der oben beschriebenen Verfahrensschritte ausführt und zum Beispiel Programmabschnitte umfasst, mit welchen von einer optischen Kamera erfasste Bilddaten so ausgewertet werden können, dass Abmessungen oder die Geometrie eines sichtbaren Bereiches des Instrumentes optional unter Verwendung von Navigations-Daten bestimmt werden können, wobei die optisch erfassten Daten mit Präkalibrier-Daten verglichen werden können.

Weiterhin bezieht sich die Erfindung auf ein Programmspeichermedium oder ein Computerprogrammprodukt mit einem solchen Programm.

Die Erfindung bezieht sich weiterhin auf eine Vorrichtung zum Kalibrieren eines bevorzugt medizinisch verwendbaren Instrumentes, an welchem mindestens ein Marker oder ein Referenzstern angebracht ist, mit einer Recheneinheit und einem damit verbundenen Speicher, in welchem Präkalibrier-Daten mindestens eines medizinischen Instrumentes abgelegt sind. Weiterhin ist mindestens eine Kamera vorgesehen, mit welcher die an dem Instrument angebrachten Marker erfasst werden können, wobei die Kamera mit einer Recheneinheit verbunden ist, welche die räumliche Position des Instrumentes anhand der erfassten Marker-Bilddaten und optional anhand der Präkalibrierdaten ermitteln kann. Die Vorrichtung weist weiterhin eine Kamera auf, mit welcher das Instrument selbst oder die Geometrie oder Abmessung bestimmter Teilbereiche davon erfasst werden kann, wobei die Kamera ebenfalls mit der Recheneinheit verbunden ist, so dass in der Recheneinheit ein Vergleich der von der Kamera optisch erfassten InstrumentenDaten mit den in dem Speicher abgelegten Präkalibrier-Daten durchgeführt werden kann. Dabei kann die Kamera zur Erfassung der Marker-Positionen identisch sein mit der Kamera zur optischen Erfassung des Instrumentes. Ebenso ist es möglich, dass zwei verschiedene Kameras oder Kamerasysteme vorgesehen sind, um zum Beispiel mit einer Kamera die Position der Marker zu erfassen und so das mit den Markern verbundene Instrument zu tracken und mit der anderen Kamera das Instrument selbst oder Abmessungen davon zu erfassen.

Es ist möglich, dass zum Beispiel an der zur optischen Erfassung des Instrumentes verwendeten Kamera selbst ein oder mehrere Marker angebracht sind, welche von der anderen Kamera erfasst werden, so dass die Position der mit den Markern verbundenen Kamera im Raum ermittelt werden kann und basierend darauf die Blickrichtung auf das von dieser Kamera erfasste medizinische Instrument errechnet werden kann, also die optisch erfassten Bilddaten in Relation zu den anhand der Marker erfassten Positionsdaten des Instruments gesetzt werden können.

Die erfindungsgemäße Vorrichtung weist bevorzugt eine Bildausgabeeinheit, wie zum Beispiel einen LCD-Bildschirm auf, auf welchem zum Beispiel ein Instrument gemäß den Präkalibrier-Daten zusammen mit einem von der Kamera erfassten Bild des Instrumentes dargestellt wird.

Weiterhin bezieht sich die Erfindung auf ein System mit einer wie oben beschriebenen Vorrichtung und einem Instrument, an welchem mindestens ein Marker angebracht ist.

Die Erfindung wird nachfolgend anhand von Ausführungsbeispielen beschrieben werden. Es zeigen:
- Figur 1: eine erste Ausführungsform einer erfindungsgemäßen Vorrichtung;
- Figur 2: eine zweite Ausführungsform einer erfindungsgemäßen Vorrichtung;
- Figur 3: das Prinzip der Videoüberlagerung von virtuellem und real erfasstem Instrumentenbild;
- Figur 4: ein Überlagerungsbild der Instrumente mit Fehlerermittlung;
- Figur 5: einen Spreader für das navigierte Einsetzen von Bandscheibenimplantaten in Draufsicht; und
- Figur 6: eine Seitenansicht auf den Spreader von Figur 5.

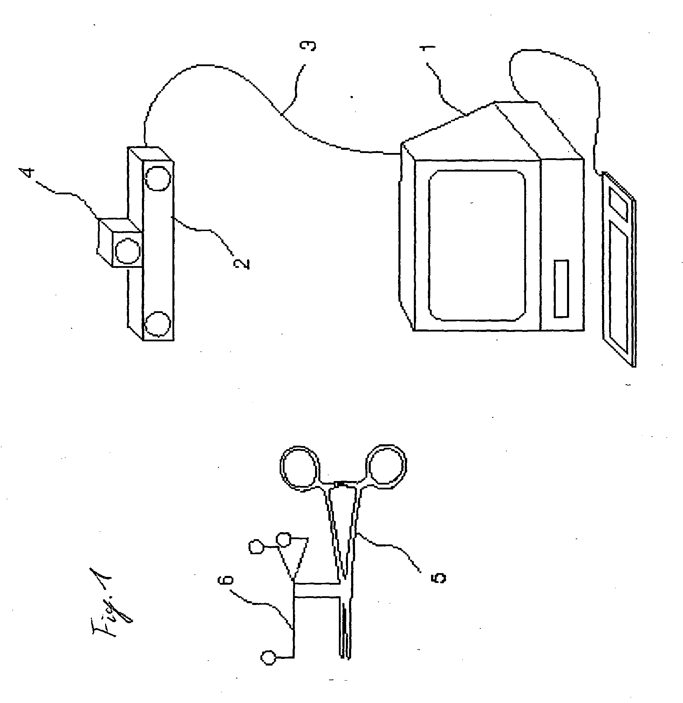

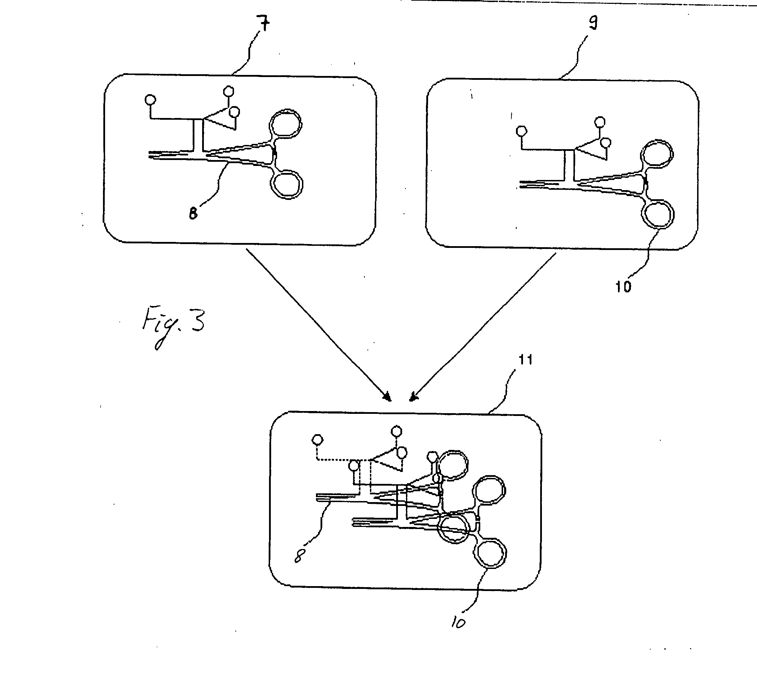

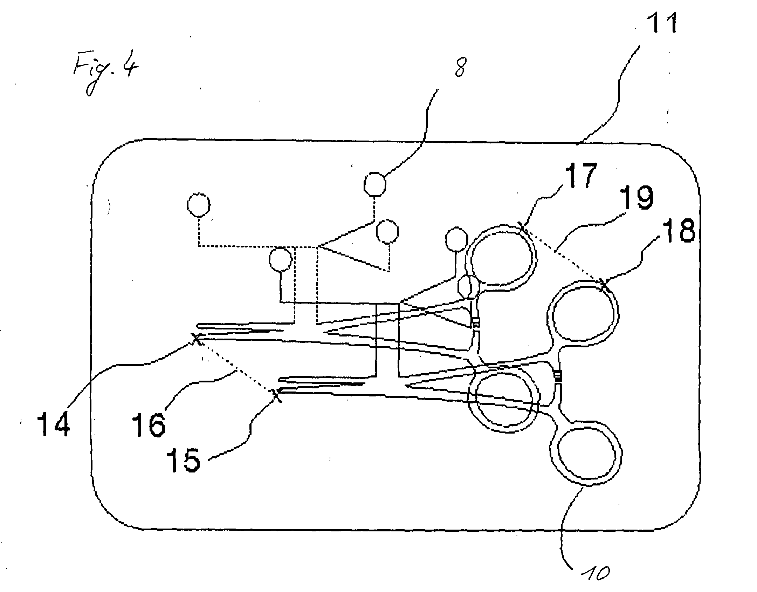

Figur 1 zeigt eine erste Ausführungsform eines erfindungsgemäßen Navigaticnssystems 1, welches mit einer optischen Kamera 4 gekoppelt ist. Das Navigationssystem 1 ist mittels einer Datenleitung, wie zum Beispiel einem Kabel 3 oder über Funk, mit einem optischen Tracking-System 2 bestehend aus zwei Infrarotkameras verbunden, welche von den drei Markern des Referenzsternes 6 reflektierte Lichtsignale erfassen können, um so die Position des mit dem Referenzstern 6 verbundenen medizinischen Instrumentes 5 in Gestalt einer Schere zu erfassen. Die Videokamera 4 ist in einer relativ zum Tracking- oder Kamerasystem 2 festen Position. Die von dem optischen Tracking-System 2 erfassten Daten des Referenzsternes 6 werden zusammen mit den von der Videokamera 4 erfassten Daten des Instrumentes 5 an die Recheneinheit 1 übersandt und wie nachfolgend unter Bezugnahme auf die Figuren 3 und 4 beschrieben ausgewertet.

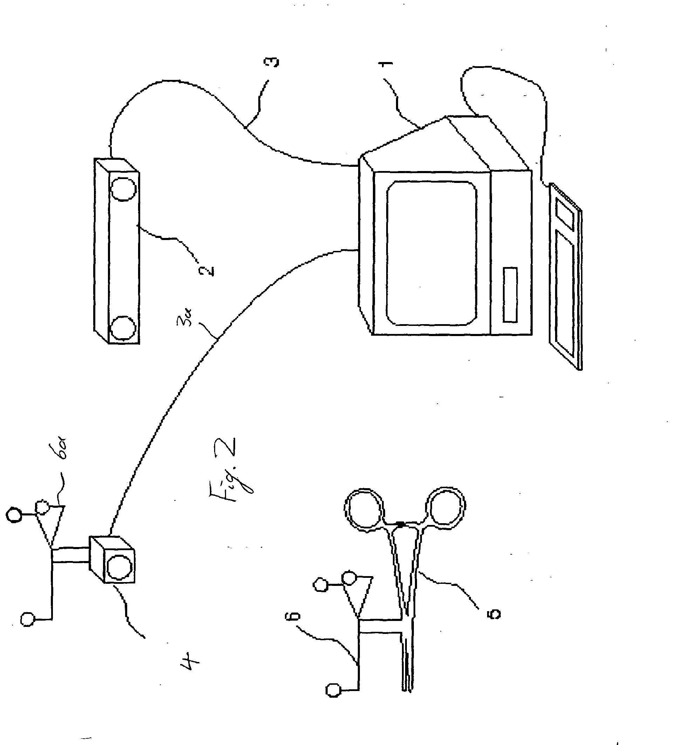

Durch die feste Position der Videokamera 4 relativ zum optischen Trackingsystem 2 entfällt die Berechnung der aktuellen Position der Videokamera 4 im Raum, d.h. die aktuelle Position ist genauer, da jede Messung des optischen Trackingsystem 2 eine gewisse Ungenauigkeit enthält. Durch die Kalibrierung der Videokamera 4 erhält man die Informationen für die "virtuelle Kamera". Diese ist aber nur gültig für die momentane Position der Videokamera 4 relativ zum Trackingsystem 2 zum Zeitpunkt der Kalibrierung. Bei einer festen Position der Videokamera 4 bleibt diese im nachhinein unverändert. Bei einer losgelösten Videokamera 4, wie sie in Figur 2 gezeigt wird, wird deshalb zusätzlich die aktuelle Position der Videokamera 4 bestimmt, um die Position der getrackten Instrumente 5 mit der "virtuellen Kamera" in Verbindung bringen zu können.

Figur 2 zeigt eine zweite Ausführungsform, wobei die optische Kamera 4 von dem optischen Tracking-System 2 losgelöst ist und über eine separate Datenverbindung, wie zum Beispiel ein Kabel 3a, mit der Recheneinheit 1 verbunden ist. Eine solche Anordnung ermöglicht es die Instrumentenerfassung durch die Videokamera 4 flexibler zu gestalten, da diese unabhängig vom Tracking-System 2 positioniert werden kann. Hierzu muss ausgehend von dem Koordinatensystem der Videokamera 4 der Abstand des Instrumentes 5 von der Video-Kamera 4 ermittelt werden, um die von der Videokamera 4 erfassten Bilddaten so auswerten zu können, dass hieraus Abmessungen oder die Geometrie des Instrumentes 5 ermittelt werden kann. Da die Videokamera 4 mit einem Referenzstern 6a verbunden ist, so dass der Referenzstern 6a vom Tracking-System 2 erfasst werden kann und hieraus die Lage der Videokamera 4 im Raum und somit auch aus der von dem Tracking-System 2 erfassten Lage des Instrumentes 5 im Raum die Relativposition zwischen Videokamera 4 und Instrument 5 berechnet werden kann, kann der Abstand des Instrumentes 5 von der Videokamera 4 bestimmt werden.

Figur 3 zeigt das Prinzip der Videoüberlagerung des Präkalibrier-Daten-Bildes mit dem von der Videokamera 4 erfassten Bild 8, wobei in der Videoaufnahme 7 ein Bild 8 des tatsächlichen vor der Videokamera 4 befindlichen Instrumentes 5 gezeigt ist. Das Navigationssystem 1 berechnet ein ähnliches Bild 9 basierend auf der mittels des Tracking-Systems 2 berechneten Positions- oder Lageinformation des Instrumentes 5 und basierend auf der Kalibrierung der Videokamera 4. Dieses Bild 9 enthält eine computererzeugte Version der Darstellung des Instrumentes 10. Diese beiden Bilder 7 und 9 werden verwendet, um ein Überlagerungsbild 11 zu erzeugen, in welchem beide Ansichten des Instrumentes 8 und 10 übereinander dargestellt werden. Wenn das Instrument 5 den Spezifikationen durch die Präkalibrier-Daten entspricht, können die beiden Bilder 8 und 10 vollständig in Deckung gebracht werden. Falls jedoch das Instrument 5 von der durch die Präkalibrier-Daten vorgegebenen Spezifikation abweicht, zeigen sich Unterschiede zwischen dem Objekt 8 und 10, welche eine Verifikation der Genauigkeit des Instrumentes 5 ermöglichen.

Figur 4 zeigt in vergrößerter Darstellung das in Figur 3 gezeigte Überlagerungsbild 11, wobei das Videoobjekt 8 und das computererzeugte Objekt 10 nicht exakt an derselben Stelle in dem Überlagerungsbild 11 liegen. Um eine direkte Überlagerung oder einen Vergleich der Objekte 8 und 10 zu erhalten, können korrespondierende Eckpunkte 14 und 15 oder 17 und 18 der Objekte 8 und 10 verwendet werden und die Differenzen 16 und 19 dazwischen berechnet werden. Werden mehrere Differenzen bezüglich korrespondierender Eckpunkte oder Kanten berechnet, so kann ermittelt werden, wie genau die zwei Objekte 8 und 10 registriert sind oder übereinstimmen. Es ist möglich spezifische Eckpunkte zum Vergleich der Objekte vordefiniert in einem Modell oder den Präkalibrier-Daten vorzugeben, so dass zum Beispiel auch die Sichtbarkeit von bestimmten funktionellen Elementen, Punkten oder Flächen überprüft werden kann, wie zum Beispiel die Sichtbarkeit einer Spitze des Instrumentes 5 im Videobild. Ebenso können ergänzend oder anstatt der Eckpunkte auch Linien, Kurven oder Formen verglichen werden.

Falls mehr als eine Ansicht des Instruments 5 verwendet wird, kann die Position der Eckpunkte 14 und 17 im dreidimensionalen Raum bestimmt werden. Für die Punkte 15 und 18 sind diese Positionen aus den Präkalibrier-Daten bekannt. Dadurch kann die exakte Abweichung des Instruments 5 von den Präkalibrier-Daten berechnet werden.

Alternativ könnte ähnlich wie beim CT-Fluoro-Matching vorgegangen werden, wobei versucht wird, eine bekannte Form eines Objektes mit einem oder mehreren Videobildern, in welchen das Objekt gezeigt ist, zu matchen. Dies würde es ermöglichen, einen Gesamtwert des Unterschiedes oder Fehlers zwischen der Position des Instrumentes wie von der Videokamera erfasst und der Position wie von dem Computer basierend auf der Tracking-Information berechnet zu ermitteln. Mit diesem Vergleich wäre man in der Lage, Registrierungsungenauigkeiten zu detektieren.

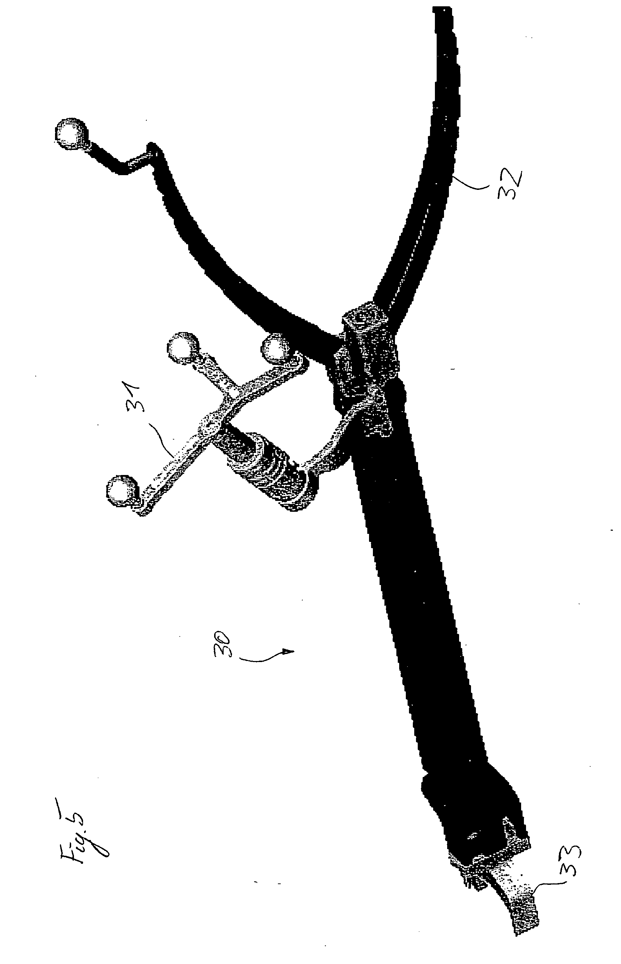

Figur 5 zeigt einen Spreader 30, mit welchem Bandscheibenimplantate navigiert eingesetzt werden können. Bei einem Spreader ist es zum exakten Positionieren des Bandscheibenimplantates wichtig zu ermitteln, welchen Abstand die Spitze des Spreaders von dem an dem Spreader angebrachten Referenzstern 31 hat. Werden die Griffe 32 des Spreaders 30 bewegt, so bewegt sich die mit den Griffen 32 gekoppelte Zange 33 am vorderen Ende des Spreaders 30, so dass aufgrund der mechanischen Kopplung zwischen den Spreader-Griffen 32 und der Zange 33 anhand des Öffnungswinkels der Griffe 32 festgestellt werden kann, wie weit die Zange 33 am vorderen Ende des Spreaders 30 geöffnet ist, d.h. wie weit die an der Zange 33 anliegenden Wirbel auseinandergespreizt wurden.

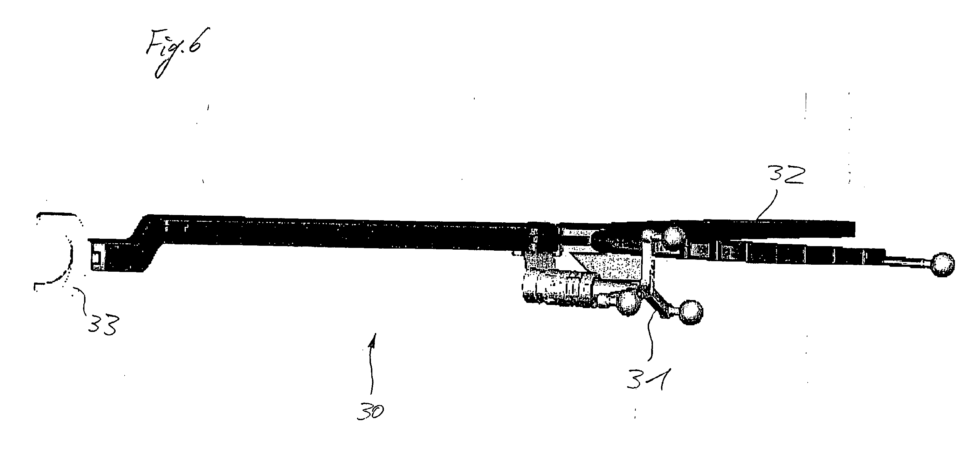

Der in den Figuren 5 und 6 gezeigte Spreader kann mittels der erfindungsgemäßen Vorrichtung unter Verwendung des erfindungsgemäßen Verfahrens kalibriert werden, so dass erkannt werden kann, ob zum Beispiel aufgrund der starken mechanischen Belastung an der Vorderseite des Spreaders der Spreader noch mit den Präkalibrier-Daten übereinstimmt und ob zum Beispiel eine Bewegung der Spreader-Griffe 32 zur gewünschten Spreizung der Zange 33 führt oder ob eine Neukalibrierung des Spreaders 30 durchgeführt werden muss.

## Patentansprüche

1. Verfahren zum Kalibrieren der geometrischen Struktur oder Konfiguration eines Instruments (5) oder Implantats , an welchem Instrument (5) oder Implantat mindestens ein Marker (6) angebracht ist, wobei die Position des Instrumentes (5) oder Implantats im Raum mittels des mindestens einen Markers (6) ermittelt wird, die Umrisse oder Ansicht oder Geometrie des Instrumentes (5) oder Implantats von mindestens einer Seite durch eine Video-Kamera (4) optisch erfasst werden oder wird, aus gespeicherten Präkalibrier-Daten des Instruments (5) oder Implantats, die ein Modell des Instruments (5) oder Implantats darstellen, korrespondierende Umrisse, Ansichten oder Geometrien berechnet werden, welche der mittels des Markers gemessenen Relativ-Position des Instruments (5) oder Implantats zur Video-Kamera (4) entsprechen, und die erfassten Umrisse erfasste Ansicht oder erfasste Geometrie mit den berechneten korrespondierenden Umrissen, Ansichten oder Geometrien des Instrumentes (5) oder Implantats verglichen werden oder wird, um zu ermitteln, ob das Instrument (5) oder Implantat kalibriert ist.

2. Verfahren nach Anspruch 1, wobei das Kalibrier-Verfahren berührungslos durchgeführt wird und das Instrument (5) zum Kalibrieren nicht an ein Objekt oder eine Fläche angelegt wird.

3. Verfahren nach einem der vorhergehenden Ansprüche, wobei das Instrument (5) optisch aus mehreren Richtungen mit mehreren Seitenansichten erfasst wird.

4. Verfahren nach einem der vorhergehenden Ansprüche, wobei eine Sichtbarkeitsüberprüfung vordefinierter Positionen des Instruments (5) durchgeführt wird, um zu überprüfen, ob die vordefinierten Positionen in der optischen Erfassung sichtbar sind.

5. Verfahren nach einem der vorhergehenden Ansprüche, wobei nur bestimmte Bereiche, insbesondere eine oder mehrere Spitzen, Kanten und/oder funktionale Flächen des Instrumentes (5) nach der optischen Erfassung ausgewertet oder mit Präkalibrier-Daten verglichen werden.

6. Verfahren nach einem der vorhergehenden Ansprüche, wobei in den Präkalibrier-Daten Informationen bezüglich der Geometrie, Abmessungen, Gelenke und/oder Freiheitsgrade oder Verformungsmöglichkeiten des Instruments (5) gespeichert sind.

7. Verfahren nach einem der vorhergehenden Ansprüche, wobei aus den optisch erfassten Instrumentendaten nach einem Vergleich mit den Präkalibrier-Daten die aktuelle Konfiguration des Instruments (5) ermittelt wird.

8. Verfahren nach einem der vorhergehenden Ansprüche, wobei mittels eines Vergleichs der optischen Instrumentendaten mit den Präkalibrier-Daten überprüft wird, ob das Instrument (5) innerhalb einer in den Präkalibrier-Daten definierten vorgegebenen Spezifikation liegt.

9. Verfahren nach einem der vorhergehenden Ansprüche, wobei im Falle einer Abweichung der optischen Instrumentendaten von den Präkalibrier-Daten die optischen Instrumentendaten anstatt der Präkalibrier-Daten zur Navigation des Instrumentes (5) verwendet werden.

10. Verfahren nach einem der vorhergehenden Ansprüche, wobei das optisch erfasste Instrumentenbild zusammen mit einem aus den Präkalibrier-Daten errechneten Instrumentenbild optisch angezeigt wird und insbesondere ein Überlappungsbild erzeugt wird.

11. Verfahren nach einem der vorhergehenden Ansprüche, wobei vor der optischen Erfassung des Instruments (5) mittels einer Kamera (4) die Kamera (4) kalibriert wird, wobei insbesondere ein bekanntes Objekt mit einem bekannten Muster in einen Sichtbereich der Kamera (4) gehalten wird.

12. Computerprogramm, welches wenn es auf einem Computer läuft, das Verfahren nach einem der vorhergehenden Ansprüche ausführt.

13. Programmspeichermedium oder Computerprogrammprodukt mit dem Programm nach dem vorhergehenden Anspruch.

14. Vorrichtung zum Kalibrieren der geometrischen Struktur oder Konfiguration eines Instrumentes (5) oder Implantats mit einer Recheneinheit (1), welche mit einem Speicher verbunden ist, in dem Präkalibrier-Daten des Instrumentes (5) oder Implantats abgelegt sind, die ein Modell des Instruments (5) oder Implantats darstellen, mindestens einer Kamera (2), mit welcher an dem Instrument (5) oder Implantat angebrachte Marker (6) erfasst werden, und mindestens einer Video-Kamera (4), wobei die mindestens eine Kamera (2) und die Video-Kamera (4) mit der Recheneinheit (1) verbunden sind und ein definiertes Lageverhältnis zueinander aufweisen, das von der Recheneinheit (1) bestimmt wird, um die von der Video-Kamera (4) erfassten Bilddaten und die gespeicherten Präkalibrier-Daten des Instruments (5) oder Implantats unter Verwendung der von der Kamera (2) erfassten Positionsinformation bezüglich des Instrumentes (5) oder Implantats so auszuwerten, dass das Verfahren nach Anspruch 1 ausgeführt wird.

15. Vorrichtung nach dem vorhergehenden Anspruch, wobei die Video-Kamera (4) mit mindestens einem Marker (6a) verbunden ist.

16. Vorrichtung nach einem der zwei vorhergehenden Ansprüche mit einer optischen Anzeige (11), auf welcher ein Videobild (8) des Instrumentes zusammen mit einem aus den Präkalibrier-Daten errechneten Bild (10) des Instrumentes dargestellt werden kann.

17. System mit einer Vorrichtung nach einem der drei vorhergehenden Ansprüche und einem Instrument (5), welches mit mindestens einem Marker (6) verbunden ist.

## Claims

1. A method for calibrating the geometric structure or configuration of an instrument (5) or implant to which at least one marker (6) is attached, wherein: the spatial position of the instrument (5) or implant is ascertained by means of the at least one marker (6); the outlines or view or geometry of the instrument (5) or implant is/are optically detected from at least one side by a video camera (4); corresponding outlines, views or geometries which correspond to the position of the instrument (5) or implant relative to the video camera (4) as measured by means of the marker are calculated from stored pre-calibration data of the instrument (5) or implant which represent a model of the instrument (5) or implant; and the detected outlines, view or geometry is/are compared with the calculated corresponding outlines, views or geometries of the instrument (5) or implant, in order to ascertain whether the instrument (5) or implant is calibrated.

2. The method according to claim 1, wherein the calibration method is performed without contact and the instrument (5) is not attached to an object or surface for calibration.

3. The method according to any one of the preceding claims, wherein the instrument (5) is optically detected from a number of directions using a number of lateral views.

4. The method according to any one of the preceding claims, wherein the visibility of pre-defined positions of the instrument (5) is checked, in order to check whether the pre-defined positions are visible in optical detection.

5. The method according to any one of the preceding claims, wherein after optical detection, only certain areas, in particular one or more tips, edges and/or functional surfaces of instruments (5), are evaluated or compared with pre-calibration data.

6. The method according to any one of the preceding claims, wherein information relating to the geometry, dimensions, joints and/or degrees of freedom or possible deformations of the instrument (5) is stored in the pre-calibration data.

7. The method according to any one of the preceding claims, wherein after comparison with the pre-calibration data, the current configuration of the instrument (5) is ascertained from the optically detected instrument data.

8. The method according to any one of the preceding claims, wherein it is ascertained, by means of comparing the optical instrument data and the pre-calibration data, whether the instrument (5) is within a given specification defined in the pre-calibration data.

9. The method according to any one of the preceding claims, wherein if the optical instrument data deviate from the pre-calibration data, the optical instrument data are used instead of the pre-calibration data for navigating the instrument (5).

10. The method according to any one of the preceding claims, wherein the optically detected instrument image is optically displayed together with an instrument image calculated from the pre-calibration data, and in particular an overlapping image is generated.

11. The method according to any one of the preceding claims, wherein before the instrument (5) is optically detected by means of a camera (4), the camera (4) is calibrated, wherein in particular, a known object having a known design is held in a viewing range of the camera (4).

12. A computer program which, when it is running on a computer, carries out the method according to any one of the preceding claims.

13. A program storage medium or computer program product comprising the program according to the preceding claim.

14. A device for calibrating the geometric structure or configuration of an instrument (5) or implant, comprising: a computing unit (1) connected to a memory in which pre-calibration data of the instrument (5) or implant are archived which represent a model of the instrument (5) or implant; at least one camera (2), using which markers (6) attached to the instrument (5) or implant are detected; and at least one video camera (4), wherein the at least one camera (2) and the video camera (4) are connected to the computing unit (1) and exhibit a defined spatial relationship to each other which is determined by the computing unit (1), in order to evaluate the image data of the instrument (5) or implant captured by the video camera (4) and the stored pre-calibration data, using the positional information relating to the instrument (5) or implant detected by the camera (2), such that the method according to claim 1 is carried out.

15. The device according to the preceding claim, wherein the video camera (4) is connected to at least one marker (6a).

16. The device according to any one of the preceding two claims, comprising an optical display (11) on which a video image (8) of the instrument can be represented together with an image (10) of the instrument calculated from pre-calibration data.

17. A system comprising a device according to any one of the preceding three claims and an instrument (5) which is connected to at least one marker (6).

## Revendications

1. Procédé pour étalonner la structure géométrique ou la configuration d'un instrument (5) ou d'un implant, instrument (5) ou implant sur lequel on place au moins un repère (6), la position de l'instrument (5) ou de l'implant dans l'espace étant déterminée au moyen dudit au moins un repère (6), les contours ou la projection ou la géométrie de l'instrument (5) ou de l'implant étant relevés optiquement depuis au moins un côté par une caméra vidéo (4) ou, à partir de données de pré-étalonnage mémorisées de l'instrument (5) ou de l'implant, qui représentent un modèle de l'instrument (5) ou de l'implant, des contours, projections ou géométries correspondantes étant calculés qui correspondent à la position relative, mesurée au moyen du repère, de l'instrument (5) ou de l'implant par rapport à la caméra vidéo (4) et les contours relevés, projections relevées ou géométries relevées étant comparés à des contours, projections ou géométries correspondants calculés de l'instrument (5) ou de l'implant, afin de déterminer si l'instrument (5) ou l'implant est étalonné.

2. Procédé selon la revendication 1, dans lequel on exécute le procédé d'étalonnage sans contact et l'instrument (5) pour l'étalonnage n'est pas placé contre un objet ou une surface.

3. Procédé selon l'une quelconque des revendications précédentes, dans lequel on relève optiquement l'instrument (5) à partir de plusieurs directions avec plusieurs vues latérales.

4. Procédé selon l'une quelconque des revendications précédentes, dans lequel on exécute une vérification de visibilité de positions prédéterminées de l'instrument (5), afin de vérifier si les positions prédéfinies sont visibles dans le relevé optique.

5. Procédé selon l'une quelconque des revendications précédentes, dans lequel on interprète seulement des zones déterminées, en particulier une ou plusieurs pointes, arêtes et/ou surfaces fonctionnelles de l'instrument (5) après le relevé optique ou on les compare à des données de pré-étalonnage.

6. Procédé selon l'une quelconque des revendications précédentes, dans lequel sont mémorisées dans les données de pré-étalonnage des informations relatives à la géométrie, aux dimensions, aux articulations et/ou aux degrés de liberté ou possibilités de déformation de l'instrument (5).

7. Procédé selon l'une quelconque des revendications précédentes, dans lequel à partir des données d'instrument relevées optiquement on détermine, après une comparaison avec les données de pré-étalonnage, la configuration actuelle de l'instrument (5).

8. Procédé selon l'une quelconque des revendications précédentes, dans lequel on vérifie, au moyen d'une comparaison des données optiques d'instrument et des données de pré-étalonnage, si l'instrument (5) se situe à l'intérieur d'une spécification prédéfinie, définie dans les données de pré-étalonnage.

9. Procédé selon l'une quelconque des revendications précédentes, dans lequel, dans le cas d'un écart entre les données optiques d'instrument et les données de pré-étalonnage, on utilise les données optiques d'instrument à la place des données de pré-étalonnage pour la navigation de l'instrument (5).

10. Procédé selon l'une quelconque des revendications précédentes, dans lequel l'image de l'instrument, relevée optiquement, est affichée optiquement avec une image de l'instrument calculée à partir des données de pré-étalonnage, et on produit en particulier une image de recouvrement.

11. Procédé selon l'une quelconque des revendications précédentes, dans lequel avant le relevé optique de l'instrument (5) au moyen d'une caméra (4), on étalonne la caméra (4), un objet connu avec un dessin connu étant en particulier maintenu dans une zone de visée de la caméra (4).

12. Programme d'ordinateur qui lorsqu'il tourne sur un ordinateur exécute le procédé selon l'une quelconque des revendications précédentes.

13. Support de mémoire de programme ou produit de programme d'ordinateur avec le programme selon la revendication précédente.

14. Dispositif pour étalonner la structure géométrique ou la configuration d'un instrument (5) ou d'un implant, comportant une unité informatique (1) qui est reliée à une mémoire dans laquelle sont enregistrées des données de pré-étalonnage de l'instrument (5) ou de l'implant, qui constituent un modèle de l'instrument (5) ou de l'implant, comportant au moins une caméra (2) avec laquelle sont relevés des repères (6) placés sur l'instrument (5) ou l'implant, et comportant au moins une caméra vidéo (4), ladite au moins une caméra (2) et ladite au moins caméra vidéo (4) étant reliées à l'unité informatique (1) et présentant un rapport de position défini l'une par rapport à l'autre qui est déterminé par l'unité informatique (1), afin d'interpréter les données d'image, relevées par la caméra vidéo (4) de l'instrument (5) ou de l'implant, en utilisant l'information de position, relevée par la caméra (2), relative à l'instrument (5) ou à l'implant (3), de manière à ce que le procédé selon la revendication 1 soit exécuté.

15. Dispositif selon la revendication précédente, dans lequel la caméra vidéo (4) est reliée à au moins un repère (6a).

16. Dispositif selon l'une quelconque des deux revendications immédiatement précédentes, comportant un affichage optique (11) sur lequel peut être représentée une image vidéo (8) de l'instrument avec une image (10) de l'instrument, calculée à partir des données de pré-étalonnage.

17. Système comportant un dispositif selon l'une quelconque des trois revendications immédiatement précédentes ainsi qu'un instrument (5) qui est relié à au moins un repère (6).
